# EUROPEAN PATENT APPLICATION

(11) **EP 3 255 345 A1**
(43) Date of publication of application: **13.12.2017**
(21) Application number: 17173676.2
(22) Date of filing: 31.05.2017
(51) Int. Cl.: F23R 3/00, B23P 19/12, B23P 19/02, B25B 27/02, B25B 27/06

(54) **INSTALLATION TOOL AND SYSTEM FOR ASSEMBLING A GAS TURBINE COMBUSTOR**

(30) Priority: 08.06.2016 US 201615176545
(71) Applicant: General Electric Company, Schenectady, NY 12345 (US)
(72) Inventor: NITTA, Ramvineeth, Greenville, SC South Carolina 29615-4614 (US); HERBOLD, John William, Greenville, SC South Carolina 29615-4614 (US)
(74) Representative: Pöpper, Evamaria

(57) **Abstract**

An apparatus and system for assembling a combustor (20) comprises a push bar (102) including a first end portion (108) that is laterally opposed from a second end portion (110). A first alignment block (112) and a second alignment block (114) are adjustably coupled to the push bar (102). A first threaded rod extends (116) through the push bar (102) proximate to the first end portion (108) and a second threaded rod (118) extends through the push bar (102) proximate to the second end portion (110). The first alignment block (112) and the second alignment block (114) extend outwardly from an aft side (106) of the push bar (102) and are positioned between the first threaded rod (116) and the second threaded rod (118). The installation tool (100) includes a first nut and a second nut for applying axial force to the push bar (102).

## Description

### FIELD OF THE INVENTION

The present subject matter relates generally to a gas turbine and more particularly to an installation tool and a method for installing an annular liner or sleeve such as a combustion liner or flow sleeve into a combustor of a gas turbine.

### BACKGROUND OF THE INVENTION

Gas turbines typically include a compressor section, a combustion section, and a turbine section. The combustion section generally includes an annular array of combustors arranged about an axis of the gas turbine. Each combustor includes a combustion liner which at least partially defines a combustion chamber of a respective combustor. In certain configurations, a flow sleeve may at least partially surround the combustion liner and define a flow path to a head end of the combustor.

When installing a combustion liner and/or a flow sleeve into a combustor, a significant amount of force is often required to overcome friction at an interface between the combustion liner and the transition duct and/or friction at an interface defined between the flow sleeve and an impingement sleeve that surrounds the transition duct. For example, a hula or spring-type seal is typically disposed at one or both of the interfaces. The hula seal must be compressed in order to permit the combustion liner to slide into the transition duct or for the flow sleeve to slide into the impingement sleeve. This often requires several hundred pounds of axial installation force.

Typically, a hammer may be used to provide the axial force needed to compress the hula seal(s). However, striking the respective forward ends of the combustion liner and/or the flow sleeve may result in uneven axial forces which may result in the combustion liner being improperly aligned in the combustion casing and/or not fully seated within the transition duct and/or the flow sleeve being improperly aligned in the combustion casing and/or not fully seated within the impingement sleeve.

### BRIEF DESCRIPTION OF THE INVENTION

Aspects and advantages of the invention will be set forth in part in the following description, or may be obvious from the description, or may be learned through practice of the invention.

In one embodiment, the present subject matter is directed to an installation tool for assembling a combustor. The installation tool includes a push bar having a forward side, an aft side and a first end portion laterally opposed from a second end portion. A first alignment block is adjustably coupled to the push bar and a second alignment block is adjustably coupled to the push bar. The second alignment block is laterally spaced from the first alignment block. A first threaded rod extends through the forward side and the aft side of the push bar proximate to the first end portion. A second threaded rod extends through the forward side and the aft side of the push bar proximate to the second end portion. The first alignment block and the second alignment block extend outwardly from the aft side of the push bar between the first threaded rod and the second threaded rod. A first nut is threaded onto the first threaded rod. Rotation of the first nut applies an axial force to the push bar. A second nut is threaded onto the second threaded rod. Rotation of the second nut applies an axial force to the push bar.

In another aspect, the present subject matter is directed to a system for installing a combustion liner into a combustor of a gas turbine. The system comprises a push bar including a first end portion and a second end portion. The push bar extends across an opening defined in a combustor casing. The opening is sized for inserting a combustion liner therethrough. The first end portion extends over a first fastener hole defined in the combustor casing and the second end portion extends over a second fastener hole defined in the combustor casing. A first alignment block is adjustably coupled to the push bar and a second alignment block is adjustably coupled to the push bar. A forward end of the combustion liner is supported between a contact surface of the first alignment block and a contact surface of the second alignment block. An aft end of the combustion liner extends at least partially into an opening of a transition duct which is disposed within the combustor casing. A first threaded rod extends through the push bar proximate to the first end portion. An end portion of the first threaded rod is threaded into the first fastener hole of the combustor casing. A first nut is threaded to the first threaded rod and rotation of the first nut results in a force against the push bar which advances the combustion liner into the transition duct opening. A second threaded rod extends through the push bar proximate to the second end portion. An end portion of the second threaded rod is threaded into the second threaded hole of the combustor casing. A second nut is threaded to the second threaded rod and rotation of the second nut results in a force against the push bar which advances the combustion liner into the transition duct opening.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWING

A full and enabling disclosure of the present invention, including the best mode thereof, directed to one of ordinary skill in the art, is set forth in the specification, which makes reference to the appended figures, in which:
FIG. 1 illustrates a schematic depiction of an embodiment of a gas turbine;
FIG. 2 illustrates a cross-sectional side view of an exemplary combustor of a gas turbine;
FIG. 3 illustrates an isometric view of a portion of an installation tool for installing a combustion liner into a combustor of a gas turbine;
FIG. 4 illustrates a cross sectioned side view of a portion of an exemplary combustor including the installation tool as partially shown in FIG. 3, according to at least one embodiment;
FIG. 5 illustrates a top view of an exemplary first alignment block according to one embodiment of the present disclosure;
FIG. 6 illustrates a top view of an exemplary second alignment block according to one embodiment of the present disclosure; and
FIG. 7 illustrates a front view of an exemplary push bar portion of the installation tool as shown in FIG. 3, according to one embodiment of the present disclosure.

### DETAILED DESCRIPTION OF THE INVENTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

Generally, the present subject matter is directed to an installation tool and system for installing combustion liners and/or flow sleeves into a combustor of a gas turbine. Installation is accomplished by securing or attaching the installation tool to the combustor and pushing a push bar against the combustion liner or flow sleeve to force the liner into an opening of a transition duct or impingement sleeve disposed within the combustor. An axial force is exerted against the combustion liner or flow sleeve via the push bar by tightening two or more nuts threaded to two or more threaded rods which are screwed into fastener openings defined by a combustor casing, thereby pushing the combustion liner or flow sleeve into place within the combustor.

From description herein, it should be appreciated that the installation tool of the present subject matter is simple to use and permits a combustion liner or flow sleeve to be fully installed within a combustor within a relatively short period of time. Moreover, due to its simple design, the installation tool may be relatively inexpensive to manufacture. Further, depending on the materials chosen, the installation tool may be lightweight. As such, the tool can be carried, positioned on the combustor and otherwise used to install a combustion liner by a single maintenance worker. Thus, the installation tool of the present subject matter may replace complex and dangerous power tools and/or heavy installation tools that otherwise require a crane or similar lifting equipment to position the tool with respect to the combustion liner.

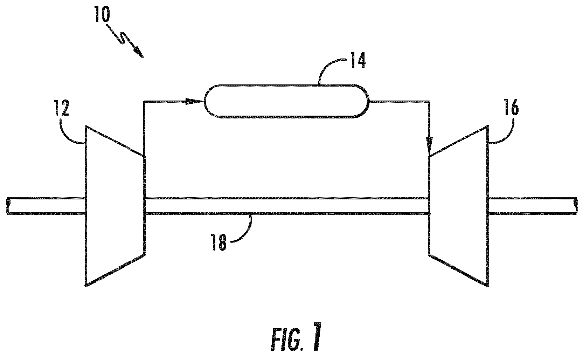

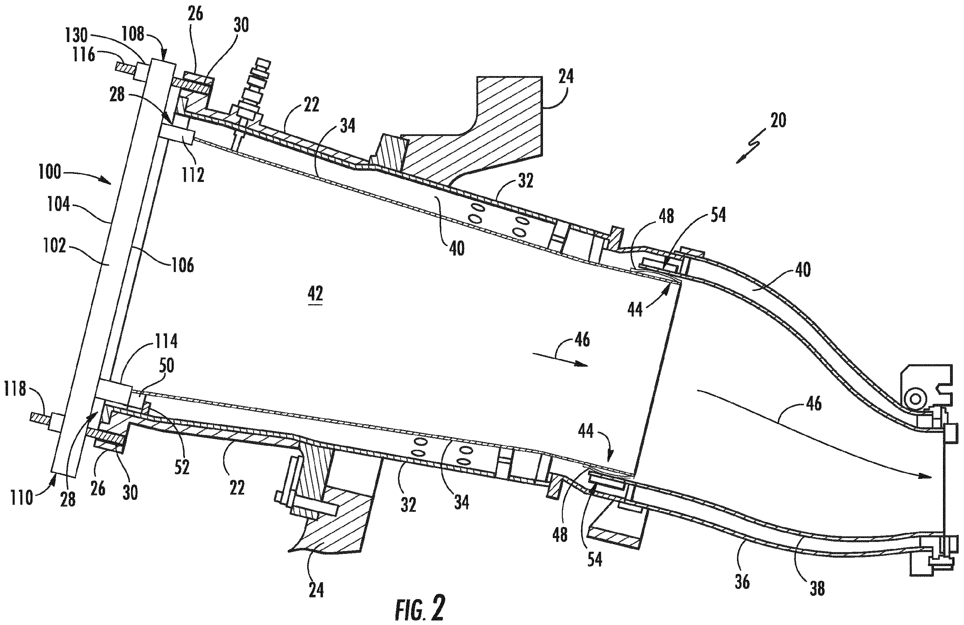

Referring to the drawings, FIG. 1 illustrates a schematic depiction of an embodiment of a gas turbine 10. The gas turbine 10 includes a compressor section 12, a combustion section 14, and a turbine section 16. The combustion section 14 may include a plurality of combustors 20 (one of which is illustrated in FIG. 2) disposed around an annular array about the axis of the gas turbine 10. The compressor section 12 and turbine section 16 may be coupled by a shaft 18. The shaft 18 may be a single shaft or a plurality of shaft segments coupled together to form the shaft 18. During operation, the compressor section 12 supplies compressed air to the combustion section 14. The compressed air is mixed with fuel and burned within each combustor 20 (FIG. 2) and hot gases of combustion flow from the combustion section 14 to the turbine section 16, wherein energy is extracted from the hot gases to produce work.

Referring to FIG. 2, a cross-sectional side view of an exemplary embodiment of a combustor 20 of a gas turbine 10. The combustor 20 may generally include a substantially cylindrical combustion casing 22 secured to a portion of a gas turbine casing 24, such as a compressor discharge casing or a combustion wrapper casing. As shown, a flange 26 may extend around an opening 28 of the combustion casing 22. The flange 26 may generally be configured such that an end cover assembly (not illustrated) may be secured to the combustion casing 22. For example, the flange 26 may define a plurality of fastener holes 30 for attaching the end cover assembly to the combustion casing 22.

The combustor 20 may also include a flow sleeve 32 and a combustion liner 34 substantially concentrically arranged within the flow sleeve 32. Both the flow sleeve 32 and the combustion liner 34 may extend, at their downstream ends, to a double walled transition piece assembly, including an impingement sleeve 36 and a transition duct 38 disposed within the impingement sleeve 36. It should be appreciated that the impingement sleeve 36 and/or the flow sleeve 32 may be provided with a plurality of air supply holes over a portion of their surfaces, thereby permitting pressurized air from the compressor section 12 to enter a radial space or annular passage 40 defined between the combustion liner 34 and the flow sleeve 32 and/or between the transition duct 38 and the impingement sleeve 36.

The combustion liner 34 may generally define a substantially cylindrical combustion chamber 42, wherein fuel and air are injected and combusted to produce hot gases of combustion. Additionally, the combustion liner 34 may be coupled at its downstream end 44 to the transition duct 38 such that the combustion liner 34 and the transition duct 38 generally define a flow path 46 for the hot gases of combustion flowing from each respective combustor 20 to the turbine section 16 of the gas turbine 10.

In one embodiment, shown in FIG. 2, the transition duct 38 may be coupled to the downstream end 44 of the combustion liner 34 with a compression or hula seal 48. In particular, the hula seal 48 may be disposed at overlapping ends of the transition duct 38 and combustion liner 34 to seal the interface between the two components. Generally, a hula seal 48 comprises a circumferential metal seal configured to be spring/compression loaded between inner and outer diameters of mating parts. It should be appreciated, however, that the interface between the combustion liner 34 and the transition duct 38 need not be sealed with a hula seal 48, but may generally be sealed by any suitable seal known in the art.

The combustion liner 34 may also include one or more male liner stops 50 that engage one or more female liner stops 52 secured to the flow sleeve 32 or, in combustors 20 without a flow sleeve 32, the combustion casing 22. In particular, the male liner stops 50 may be adapted to slide into the female liner stops 52 as the combustion liner 34 is installed within the combustor 20 to indicate the proper installation depth of the combustion liner 34 as well as to prevent rotation of the liner 34 during operation of the gas turbine 10. Additionally, the liner stops 50, 52 may ensure proper circumferential alignment of the liner 34 within the combustor 20.

In one embodiment, the female liner stops 52 may be substantially "U-shaped" and the male liner stops 50 may be substantially rectangular in cross-section such that the male liner stops 50 slides into and engages with the female liner stops 52. However, it should be appreciated that the liner stops 50, 52 may generally have any shape and/or configuration to assist in installation of the combustion liner 34 and/or prevent rotation of the combustion liner 34 during operation. Moreover, it should be appreciated that, in alternative embodiments, the male liner stops 50 may be disposed on the flow sleeve 32 or combustion casing while the female liner stops 52 are disposed on the combustion liner 34.

Generally, when installing a combustion liner 34 within a combustor 20, the combustion liner 34 may initially be pushed into the combustor 20 by hand. However, as the combustion liner 34 is pushed into the combustor 20, a point may be reached where hand-force is insufficient to achieve proper installation depth into an upstream opening or end 54 of the transition duct 38. For example, in embodiments utilizing a hula seal 48 to seal the interface between the combustion liner 34 and the transition duct 38, a significant amount of axial force may be required to compress the hula seal 48 and thereby properly position the combustion liner with respect to the transition duct 38. Such axial force, as will be described below, may be provided by an installation tool 100 of the present subject matter to ensure that the combustion liner 34 is fully and properly installed within the combustor 20 particularly within the upstream opening 54 of the transition duct 38.

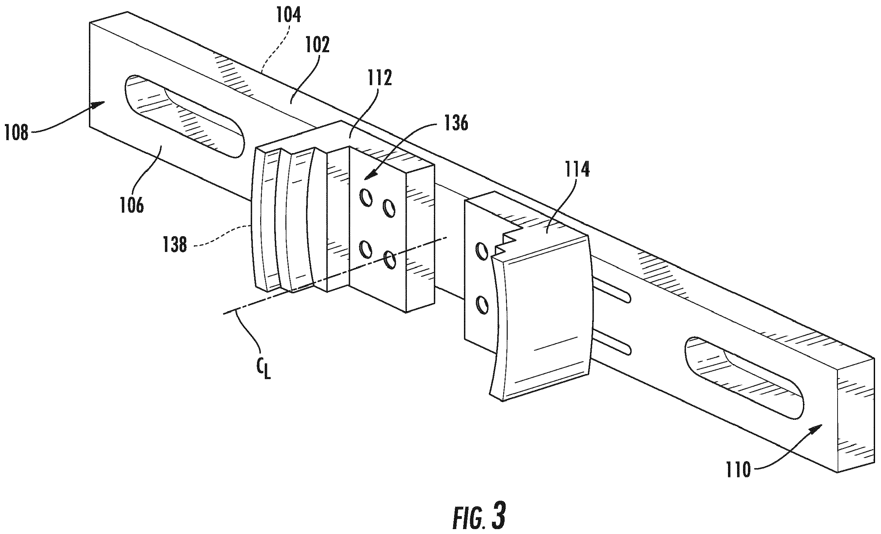

In accordance with an aspect of the present subject matter, FIGS. 2, 3, 4, 5, 6 and 7 illustrate an embodiment and/or components of an embodiment of an installation tool 100 for installing a combustion liner 34 and/or a flow sleeve 32 within a combustor 20. FIG. 3 provides an isometric view of a portion of the installation tool 100. As shown in FIGS. 2 and 3, the installation tool 100 includes a push bar 102 having a forward side 104, an aft side 106 and a first end portion 108 laterally opposed from a second end portion 110. A first alignment block 112 is adjustably coupled to the push bar 102. A second alignment block 114 is also adjustably coupled to the push bar 102. The second alignment block 114 is laterally spaced from the first alignment block 112 along the aft side 106 of the push bar 102. As shown in the illustrated embodiment, the push bar 102 of the installation tool 100 may be configured as an "I-beam." However, it should be appreciated that the push bar 102 may generally have any suitable shape and/or cross-section.

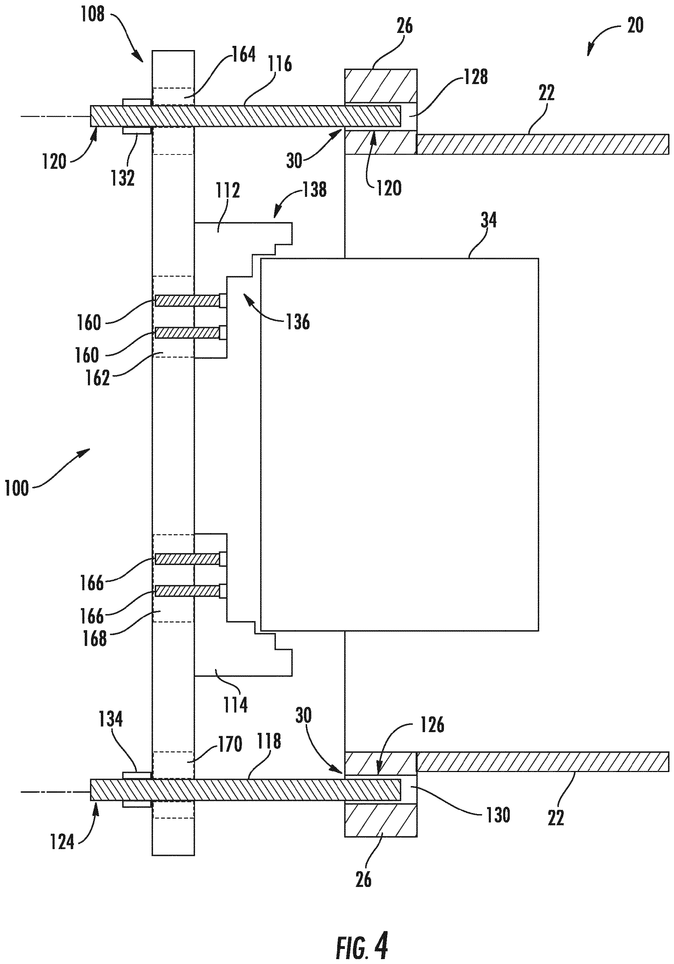

FIG. 4 provides a cross sectioned side view of a portion of the combustor 20 including the installation tool 100 integrated in a system for installing a combustion liner into a combustor 20. As shown in FIGS. 2 and 4 collectively, a first threaded rod 116 extends through the forward side 104 and the aft side 106 of the push bar 102 proximate to the first end portion 108. A second threaded rod 118 extends through the forward side 104 and the aft side 106 of the push bar 102 proximate to the second end portion 110. In particular embodiments, the first and/or the second threaded rods 112, 114 may be formed as a cap screw or headed bolt. Referring to FIG. 4, the first threaded rod 116 has a forward end portion 120 that is axially spaced from an aft end portion 122 with respect to an axial centerline of the first threaded rod 116. The second threaded rod 118 has a forward end portion 124 that is axially spaced from an aft end portion 126 with respect to an axial centerline of the second threaded rod 118. As shown in FIG. 4, the aft end portion 122 of the first threaded rod 116 is threaded into a first fastener hole 128 of the plurality of fastener holes 30 and the aft end portion 126 of the second threaded rod 118 is threaded into a second fastener hole 130 of the plurality of fastener holes 30.

As shown in FIGS. 2 and 4 collectively, the installation tool or system 100 includes a first nut 132 which is threaded onto the first threaded rod 116 and a second nut 134 which is threaded onto the second threaded rod 118. Rotation of the first nut 132 results in an axial or pushing force to the first end portion 108 of the push bar 102 thereby resulting in axial translation of the combustion liner 34 towards or into the upstream end 54 of the transition duct 38 (FIG. 2) and rotation of the second nut 134 results in an axial or pushing force to the second end portion 110 of the push bar 102 also resulting in axial translation of the combustion liner 34 towards or into the upstream end 54 of the transition duct 38 (FIG. 2). It should also be appreciated that the installation tool 100 may be used in concert with other combustor components such as the casing 22, the combustion liner 34 and the transition duct 38 to make up a system for installing a combustion liner 34 within a combustor 20.

As shown in FIGS. 3 and 4 collectively, the first alignment block 112 and the second alignment block 114 extend axially or outwardly from the aft side 106 of the push bar 102 and are positioned between the first threaded rod 116 and the second threaded rod 118.

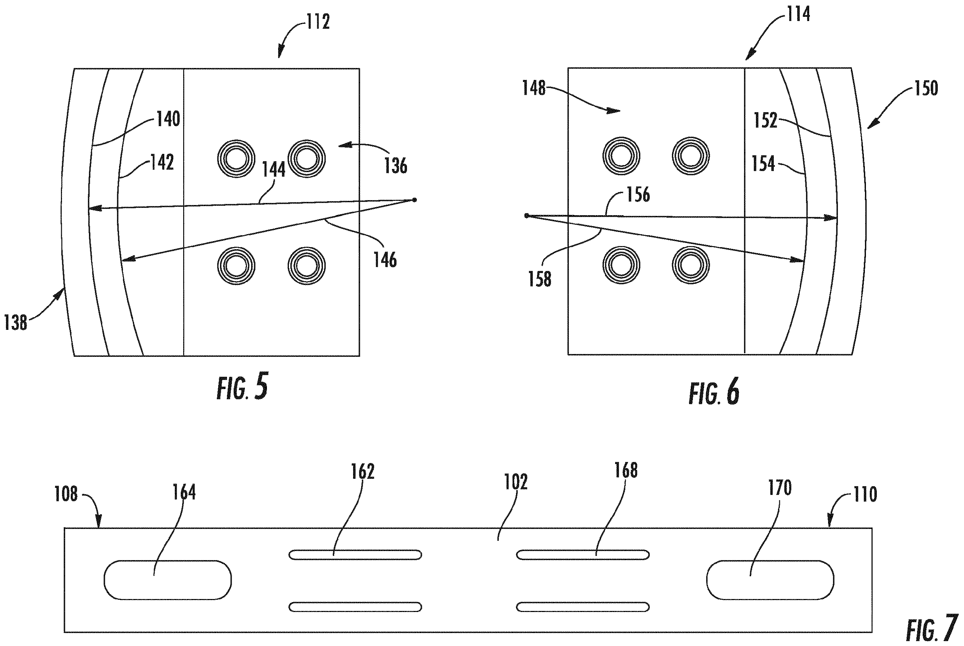

FIG. 5 provides a top view of the first alignment block 112 according to one embodiment of the present disclosure. As shown in FIG. 5, the first alignment block 112 includes an inner portion 136 and an outer portion 138. The inner portion 136 of the first alignment block 112 includes and/or defines at least one contact surface or wall. The contact surface may be formed complementary to the shape of the combustion liner 34 and/or to the flow sleeve 32. In one embodiment, the inner portion 136 of the first alignment block 112 includes a first arcuate shaped contact surface 140 and a second arcuate shaped contact surface 142. In one embodiment, a radius 144 of the first arcuate shaped contact surface 140 is greater than a radius 146 of the second arcuate shaped contact surface 142. In particular embodiments, the arcuate shaped contact surface(s) 140, 142 may be formed by one or more removable contact pad(s). Thus, the contact pads for the first alignment block 112 may serve as the interface between the installation tool 100 and the combustion liner 34 during installation. As such, it should be appreciated that, in one embodiment, the contacts pads may be formed from a relatively soft material to prevent damage to the combustion liner 34. For example, the contact pads may be formed from a soft thermoplastic, such as DERLIN, or any other suitable soft material, such as wood.

FIG. 6 provides a top view of the second alignment block 114 according to one embodiment of the present disclosure. As shown in FIG. 6, the second alignment block 114 includes an inner portion 148 and an outer portion 150. The inner portion 148 of the second alignment block 114 includes and/or defines at least one contact surface. The contact surface may be formed complementary to the shape of the combustion liner 34 and/or to the flow sleeve 32. In one embodiment, the inner portion 148 of the second alignment block 114 includes a first arcuate shaped contact surface 152 and a second arcuate shaped contact surface 154. A radius 156 of the first arcuate shaped contact surface 152 is greater than a radius 158 of the second arcuate shaped contact surface 154. In particular embodiments, the contact surface(s) 152, 154 may be formed by one or more removable contact pad(s). Thus, the contact pads for the second alignment block 114 may serve as the interface between the installation tool 100 and the combustion liner 34 during installation. As such, it should be appreciated that, in one embodiment, the contacts pads may be formed from a relatively soft material to prevent damage to the combustion liner 34. For example, the contact pads may be formed from a soft thermoplastic, such as DERLIN, or any other suitable soft material, such as wood.

In particular embodiments, as shown in FIG. 4, the first alignment block 112 is adjustably coupled to the push bar 102 via at least one mechanical fastener 160 such as a bolt. The at least one mechanical fastener 160 extends through a first bolt slot 162 defined by the push bar 102. FIG. 7 provides a front view of the push bar 102 according to one embodiment of the present disclosure. As shown in FIG. 7, the first bolt slot 162 may extend laterally across a portion of the push bar 102. The first bolt slot 162 may be formed so as to allow for lateral adjustment of the first alignment block 112 to accommodate different sized combustion liners or flow sleeves.

As shown in FIG. 7, the push bar 102 may define a first rod slot 164 that extends laterally across a portion of the push bar 102 proximate to the first end portion 108. As shown in FIG. 4, the first threaded rod 116 extends through the first rod slot 164. The first rod slot 164 may be formed to allow for use of the installation tool 100 on multiple combustor types with different sized casing openings.

In particular embodiments, as shown in FIG. 4, the second alignment block 114 is adjustably coupled to the push bar 102 via at least one mechanical fastener 166 such as a bolt. The at least one bolt 166 extends through a second bolt slot 168 defined by the push bar 102.

As shown in FIG. 7, the second bolt slot 168 may extend laterally across a portion of the push bar 102. The second bolt slot 168 may be formed so as to allow for lateral adjustment of the second alignment block 114 to accommodate different sized combustion liners or flow sleeves. As shown in FIG. 7, the push bar 102 may define a second rod slot 170 that extends laterally across a portion of the push bar 102 proximate to the second end portion 110. As shown in FIG. 4, the second threaded rod 118 extends through the second rod slot 170. The second rod slot 170 may be formed to allow for use of the installation tool 100 on multiple combustor types with different sized casing openings.

The present subject matter is also directed to a method of installing a combustion liner 34 within a combustor 20, which will be described with reference to the embodiment illustrated in FIGS. 2, 3 and 4. Initially, the combustion liner 34 may be inserted, at least partially, into the combustor 20. For instance, the combustion liner 34 may be loosely set into position to the point where hand force limits further installation depth into the upstream end or opening 54 of the transition duct 38. The installation tool 100 of the present subject matter may then be secured to the casing 22 of the combustor 20. Thus, in the illustrated embodiment, the first alignment block 112 and the second alignment block 114 should be adjusted laterally to accommodate for the diameter of the combustion liner 34. The push bar 102 may be secured to the flange 26 of the combustion casing 22 by threading the first threaded rod 116 and the second threaded rod 118 into the corresponding fastener holes 128, 130. The first nut 132 and the second nut 134 may be tightened against the forward side 104 of the push bar 102. The first nut 132 and the second nut 134 may be tightened via a wrench or other torque generating device to apply an axial force to the push bar 102, thereby advancing the combustion liner 34 into the transition duct 38. The force applied to the combustion liner 34 via the push bar 102 will be sufficient to overcome any friction otherwise preventing installation of the combustion liner 34 (e.g. the friction/force required to compress the hula seal 48). The first and second nuts 132, 134 may be rotated until the aft side of the push bar 102 contacts with the flange 26 of the combustor casing 22.

In one embodiment, the push bar 102 may generally be pushed against the combustion liner 34 until the input toque required on the first and second nuts 132, 134 sharply increases, indicating that the male liner stops 50 of the combustion liner 34 have fully engaged the female liner stops 52 disposed on the flow sleeve 32 or combustion casing 22. Additionally, it should be appreciated that, in one embodiment, the male liner stops 50 of the combustion liner 34 may need to be circumferentially aligned with corresponding female liner stops 52 in order to properly install the combustion liner 34 within the combustor 20. This may be achieved by a maintenance worker visually aligning the male liner stops 50 with the female liner stops 52 as the combustion liner 34 is initially inserted within the combustor 20. Alternatively, the installation tool 100 of the present subject matter may be used in conjunction with an alignment guide configured to guide each male liner stop 50 into its corresponding female liner stop 52.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Various aspects and embodiments of the present invention are defined by the following numbered clauses:
1. An installation tool, the installation tool comprising:
   a push bar including a forward side, an aft side and a first end portion laterally opposed from a second end portion;
   a first alignment block adjustably coupled to the push bar;
   a second alignment block adjustably coupled to the push bar and laterally spaced from the first alignment block;
   a first threaded rod that extends through the forward side and the aft side of the push bar proximate to the first end portion;
   a second threaded rod that extends through the forward side and the aft side of the push bar proximate to the second end portion, wherein the first alignment block and the second alignment block extend outwardly from the aft side of the push bar between the first threaded rod and the second threaded rod;
   a first nut threaded onto the first threaded rod, wherein rotation of the first nut applies an axial force to the push bar; and
   a second nut threaded onto the second threaded rod wherein rotation of the second nut applies an axial force to the push bar.
2. The installation tool of clause 1, wherein the first alignment block includes an inner portion and an outer portion, wherein the inner portion of the first alignment block includes an arcuate shaped contact surface.
3. The installation tool of clause 1, wherein the first alignment block includes an inner portion and an outer portion, wherein the inner portion of the first alignment block includes a first arcuate shaped contact surface and a second arcuate shaped contact surface, wherein a radius of the first arcuate shaped contact surface is greater than a radius of the second arcuate shaped contact surface.
4. The installation tool of clause 1, wherein the first alignment block is adjustably coupled to the push bar via at least one bolt, wherein the at least one bolt extends through a first bolt slot defined by the push bar.
5. The installation tool of clause 4, wherein the first bolt slot extends laterally across a portion of the push bar.
6. The installation tool of clause 1, wherein the push bar defines a first rod slot that extends laterally across a portion of the push bar proximate to the first end portion, wherein the first threaded rod extends through the first rod slot.
7. The installation tool of clause 1, wherein the second alignment block includes an inner portion and an outer portion, wherein the inner portion of the second alignment block includes an arcuate shaped contact surface.
8. The installation tool of clause 1, wherein the second alignment block includes an inner portion and an outer portion, wherein the inner portion of the second alignment block includes a first arcuate shaped contact surface and a second arcuate shaped contact surface, wherein a radius of the first arcuate shaped contact surface is greater than a radius of the second arcuate shaped contact surface.
9. The installation tool of clause 1, wherein the second alignment block is adjustably coupled to the push bar via at least one bolt, wherein the at least one bolt extends through a second bolt slot defined by the push bar.
10. The installation tool of clause 9, wherein the second bolt slot extends laterally across a portion of the push bar.
11. The installation tool of clause 1, wherein the push bar defines a second rod slot that extends laterally across a portion of the push bar proximate to the second end portion, wherein the second threaded rod extends through the second rod slot.
12. A system for installing a combustion liner into a combustor of a gas turbine, the system comprising:
   a push bar including a first end portion and a second end portion, wherein the push bar extends across an opening defined in a combustor casing, wherein the opening is sized for inserting a combustion liner therethrough, wherein the first end portion extends over a first fastener hole defined in the combustor casing and the second end portion extends over a second fastener hole defined in the combustor casing;
   a first alignment block adjustably coupled to the push bar;
   a second alignment block adjustably coupled to the push bar, wherein a forward end of the combustion liner is supported between a contact surface of the first alignment block and a contact surface of the second alignment block and wherein an aft end of the combustion liner extends at least partially into an opening of a transition duct disposed within the combustor casing;
   a first threaded rod that extends through the push bar proximate to the first end portion, wherein an end portion of the first threaded rod is threaded into the first fastener hole of the combustor casing;
   a first nut threaded to the first threaded rod, wherein rotation of the first nut results in a force against the push bar which advances the combustion liner into the transition duct opening;
   a second threaded rod that extends through the push bar proximate to the second end portion, wherein an end portion of the second threaded rod is threaded into the second threaded hole of the combustor casing; and
   a second nut threaded to the second threaded rod, wherein rotation of the second nut results in a force against the push bar which advances the combustion liner into the transition duct opening.
13. The system of clause 12, wherein the contact surface of the first alignment block includes a first arcuate shaped contact surface and a second arcuate shaped contact surface, wherein a radius of the first arcuate shaped contact surface is greater than a radius of the second arcuate shaped contact surface.
14. The system of clause 12, wherein the first alignment block is adjustably coupled to the push bar via at least one bolt, wherein the at least one bolt extends through a first bolt slot defined by the push bar.
15. The system of clause 12, wherein the push bar defines a first rod slot that extends laterally across a portion of the push bar proximate to the first end portion, wherein the first threaded rod extends through the first rod slot.
16. The system of clause 12, wherein the contact surface of the second alignment block includes a first arcuate shaped contact surface and a second arcuate shaped contact surface, wherein a radius of the first arcuate shaped contact surface is greater than a radius of the second arcuate shaped contact surface.
17. The system of clause 12, wherein the second alignment block is adjustably coupled to the push bar via at least one bolt, wherein the at least one bolt extends through a second bolt slot defined by the push bar.
The system of clause 12, wherein the push bar defines a second rod slot that extends laterally across a portion of the push bar proximate to the second end portion, wherein the second threaded rod extends through the second rod slot.

## Claims

1. An installation tool (100), the installation tool (100) comprising:
a push bar (102) including a forward side (104), an aft side (106) and a first end portion (108) laterally opposed from a second end portion (110);
a first alignment block (112) adjustably coupled to the push bar (102);
a second alignment block (114) adjustably coupled to the push bar (102) and laterally spaced from the first alignment block (112);
a first threaded rod (116) that extends through the forward side (104) and the aft side (106) of the push bar (102) proximate to the first end portion (108);
a second threaded rod (118) that extends through the forward side (104) and the aft side (106) of the push bar (102) proximate to the second end portion (110), wherein the first alignment block (112) and the second alignment block (114) extend outwardly from the aft side (106) of the push bar (102) between the first threaded rod (116) and the second threaded rod (118);
a first nut (132) threaded onto the first threaded rod (116), wherein rotation of the first nut (132) applies an axial force to the push bar (102); and
a second nut (134) threaded onto the second threaded rod (118) wherein rotation of the second nut (134) applies an axial force to the push bar (102).

2. The installation tool (100) of claim 1, wherein the first alignment block (112) includes an inner portion (136) and an outer portion (138), wherein the inner portion (136) of the first alignment block (112) includes an arcuate shaped contact surface (140).

3. The installation tool (100) of claim 1, wherein the first alignment block (112) includes an inner portion (136) and an outer portion (138), wherein the inner portion (136) of the first alignment block (112) includes a first arcuate shaped contact surface (140) and a second arcuate shaped contact surface (142), wherein a radius of the first arcuate shaped contact surface (140) is greater than a radius of the second arcuate shaped contact surface (142).

4. The installation tool (100) of claim 1, wherein the first alignment block (112) is adjustably coupled to the push bar (102) via at least one bolt (160), wherein the at least one bolt (160) extends through a first bolt slot (162) defined by the push bar (102).

5. The installation tool (100) of claim 4, wherein the first bolt slot (162) extends laterally across a portion of the push bar (102).

6. The installation tool (100) of claim 1, wherein the push bar (102) defines a first rod slot (164) that extends laterally across a portion of the push bar (102) proximate to the first end portion (108), wherein the first threaded rod (116) extends through the first rod slot (164).

7. The installation tool (100) of claim 1, wherein the second alignment block (114) includes an inner portion (136) and an outer portion (138), wherein the inner portion (136) of the second alignment block (114) includes an arcuate shaped contact surface.

8. The installation tool (100) of claim 1, wherein the second alignment block (114) includes an inner portion (148) and an outer portion (150), wherein the inner portion (148) of the second alignment block (114) includes a first arcuate shaped contact surface (152) and a second arcuate shaped contact surface (154), wherein a radius of the first arcuate shaped contact surface (152) is greater than a radius of the second arcuate shaped contact surface (154).

9. The installation tool (100) of claim 1, wherein the second alignment block (114) is adjustably coupled to the push bar (102) via at least one bolt (166), wherein the at least one bolt (166) extends through a second bolt slot (168) defined by the push bar (102).

10. The installation tool (100) of claim 9, wherein the second bolt slot (168) extends laterally across a portion of the push bar (102).

11. The installation tool (100) of claim 1, wherein the push bar (102) defines a second rod slot (170) that extends laterally across a portion of the push bar (102) proximate to the second end portion (110), wherein the second threaded rod (118) extends through the second rod slot (170).

12. A system for installing a combustion liner into a combustor of a gas turbine, the system comprising:
a push bar (102) including a first end portion (108) and a second end portion (110), wherein the push bar (102) extends across an opening (28) defined in a combustor casing (22), wherein the opening (28) is sized for inserting a combustion liner (34) therethrough, wherein the first end portion (108) extends over a first fastener hole (128) defined in the combustor casing (22) and the second end portion (110) extends over a second fastener hole (130) defined in the combustor casing (22);
a first alignment block (112) adjustably coupled to the push bar (102);
a second alignment block (114) adjustably coupled to the push bar (102), wherein a forward end of the combustion liner (22) is supported between a contact surface (140) of the first alignment block (112) and a contact surface (154) of the second alignment block (114) and wherein an aft end of the combustion liner extends at least partially into an opening (54) of a transition duct (38) disposed within the combustor casing (22);
a first threaded rod (116) that extends through the push bar (102) proximate to the first end portion (108), wherein an end portion (120) of the first threaded rod (116) is threaded into the first fastener hole (128) of the combustor casing (22);
a first nut (132) threaded to the first threaded rod (116), wherein rotation of the first nut (132) results in a force against the push bar (102) which advances the combustion liner (34) into the transition duct opening (54);
a second threaded rod (118) that extends through the push bar (102) proximate to the second end portion (110), wherein an end portion (124) of the second threaded rod (118) is threaded into the second threaded hole (130) of the combustor casing (22); and
a second nut (134) threaded to the second threaded rod (118), wherein rotation of the second nut (134) results in a force against the push bar (102) which advances the combustion liner (34) into the transition duct opening (54).

13. The system of claim 12, wherein the contact surface (140) of the first alignment block (112) includes a first arcuate shaped contact surface (140) and a second arcuate shaped contact surface (142), wherein a radius of the first arcuate shaped contact surface (140) is greater than a radius of the second arcuate shaped contact surface (142).

14. The system of claim 12, wherein the first alignment block (112) is adjustably coupled to the push bar (102) via at least one bolt (160), wherein the at least one bolt (160) extends through a first bolt slot (162) defined by the push bar (102).

15. The system of claim 12, wherein the push bar (102) defines a first rod slot (164) that extends laterally across a portion of the push bar (102) proximate to the first end portion (108), wherein the first threaded rod (116) extends through the first rod slot (164).
